# EUROPÄISCHE PATENTANMELDUNG

(11) **EP 4 170 763 A1**
(43) Veröffentlichungstag der Anmeldung: **26.04.2023**
(21) Anmeldenummer: 21203595.0
(22) Anmeldetag: 20.10.2021
(51) Int. Cl.: H01M 8/04089, H01M 8/04082, H01M 8/0662, F17C 5/06

(54) **ABLEITUNGS- UND BEFÜLLSYSTEM**

(71) Anmelder: Robert Bosch GmbH, 70442 Stuttgart (DE)
(72) Erfinder: Marceau, Cedric, 69330 Meyzieu (FR); Schmidt, Uwe, 75428 Illingen (DE)

(57) **Zusammenfassung**

Ableitungs- und Befüllsystem (1) für mehrere mit einem Fluid befüllte Druckbehälter (19) zur Ausleitung des Fluides aus dem wenigstens einen Druckbehälter in die Umgebung ab dem Überschreiten eines vorgegebenen Grenzwertes eines Ausleitungsparameters wenigstens eines Druckbehälters und zur Ausleitung des Fluides als Brennstoff zu einer Umwandlungseinheit als einer Brennstoffzelleneinheit und/oder einem Verbrennungsmotor, umfassend wenigstens ein Ablassventil (29) zum Ausleiten des Fluides aus dem wenigstens einen Druckbehälter ab dem Überschreiten des vorgegebenen Grenzwertes des Ausleitungsparameters des wenigstens einen Druckbehälters, ein Betriebsventil zum Ausleiten des Fluides aus den Druckbehältern und zu der Umwandlungseinheit, eine Betriebsausleitungsöffnung (41) zum Leiten des Fluides zu der Umwandlungseinheit, wobei das Ableitungs- und Befüllsystem eine Funktionseinheit (38) umfasst und in der Funktionseinheit als Funktionskomponenten (40) das Betriebsventil, die Betriebsausleitungsöffnung und eine Schnittstelle (42) mit Befüllöffnung zum Befüllen der Druckbehälter integriert ist.

## Beschreibung

Die vorliegende Erfindung betrifft ein Ableitungs- und Befüllsystem für mehrere mit einem Fluid befüllte Druckbehälter gemäß dem Oberbegriff des Anspruches 1, ein Druckbehältersystem gemäß dem Oberbegriff des Anspruches 9, ein Antriebssystem gemäß dem Oberbegriff des Anspruches 13 und ein Kraftfahrzeug gemäß dem Oberbegriff des Anspruches 14.

### Stand der Technik

Brennstoffzelleneinheiten als galvanische Zellen wandeln mittels Redoxreaktionen an einer Anode und Kathode kontinuierlich zugeführten Brennstoff und Oxidationsmittels in elektrische Energie um. Brennstoffzellen werden in den unterschiedlichsten stationären und mobilen Anwendungen eingesetzt, beispielweise in Häusern ohne Anschluss an ein Stromnetz oder in Kraftfahrzeugen, im Schienenverkehr, in der Luftfahrt, in der Raumfahrt und in der Schifffahrt. In Brennstoffzelleneinheiten sind eine Vielzahl von Brennstoffzellen übereinander in einem Stapel als Stack angeordnet.

In der Brennstoffzelleneinheit sind somit eine große Anzahl an Brennstoffzellen zu dem Brennstoffzellenstapel gestapelt. In dem Brennstoffzellenstapel sind Kanäle zum Durchleiten von Brennstoff, Kanäle zum Durchleiten von Oxidationsmittel und Kanäle zum Durchleiten von Kühlmittel integriert. Der Brennstoff wird in einem Druckgasspeicher gespeichert. Dabei sind häufig mehrere Druckgasspeicher als Druckbehälter zu einem Druckbehältersystem zusammengefasst. Bei außergewöhnlichen Betriebszuständen, beispielsweise bei einem Brand in einem Kraftfahrzeug, wird mit einem Ablassventil als TPRD (temperatur pressure relief device) ab dem Überschreiten von vorgegebenen Grenzwerten von Ausleitungsparametern, beispielsweise einer Temperatur von beispielsweise 200 oder 300 °C an einem Druckbehälter und einem Druck von 850 bar, aus Sicherheitsgründen der Brennstoff aus dem Druckbehältersystem unverzüglich in die Umgebung abgeleitet.

Der Brennstoff Wasserstoff wird in Druckbehältern unter einem hohen Druck von beispielsweise 800 bar gespeichert und mit einem Ableitungs- und Befüllsystem zu der Brennstoffzelleneinheit geleitet. Das Ableitungs- und Befüllsystem umfasst dabei das Ablassventil an je einem Druckbehälter, d. h. mehrere Ablassventile, ein Betriebsventil, Druckleitungen und eine Schnittstelle zum Befüllen der Druckbehälter. Diese Funktionskomponenten wie das Ablassventil und das Betriebsventil sind in aufwendiger Weise separat an Druckleitungen montiert. Dadurch ergibt sich ein hoher Aufwand für die Montage des Ableitungs- und Befüllsystems. Ferner wird dadurch ein großer Bauraum für die an unterschiedlichen Stellen von Druckleitungen montierten Funktionskomponenten notwendig. Dies ist insbesondere bei der Anwendung des Ableitungs- und Befüllsystems in Kraftfahrzeugen nachteilig.

Die DE 10 2012 000 096 A1 zeigt eine Temperatur-Druck-Entlastungsvorrichtung für ein Druckgefäß, umfassend eine Temperatur-Druck-sensitive Einheit, die derart konfiguriert ist, einen Druck des Druckgefäßes zu entlasten, wenn eine vorbestimmte Temperatur und/oder ein vorbestimmter Druck überschritten wird.

Die US 8,955,762 B2 zeigt ein Ablassventil als TPRD (temperatur pressure relief device) mit einem Gehäuse mit einer Einlassöffnung und Entlastungsöffnung. Ein Kolben als Schließorgan ist in dem Gehäuse gelagert. Eine Feder dient zur Bewegung des Schließorganes von einer Schließstellung in eine Öffnungsstellung. Ein Aktuator verändert seine Eigenschaft, nämlich das Volumen des Aktuators, in Abhängigkeit von der Temperatur, so dass mittels des Aktuators die Bewegung des Schließorganes von der Schließstellung in die Öffnungsstellung aktiviert werden kann.

### Offenbarung der Erfindung

### Vorteile der Erfindung

Erfindungsgemäßes Ableitungs- und Befüllsystem für mehrere mit einem Fluid befüllte Druckbehälter zur Ausleitung des Fluides aus dem wenigstens einen Druckbehälter in die Umgebung ab dem Überschreiten eines vorgegebenen Grenzwertes eines Ausleitungsparameters wenigstens eines Druckbehälters und zur Ausleitung des Fluides als Brennstoff zu einer Umwandlungseinheit als einer Brennstoffzelleneinheit und/oder einem Verbrennungsmotor, umfassend wenigstens ein Ablassventil zum Ausleiten des Fluides aus dem wenigstens einem Druckbehälter ab dem Überschreiten des vorgegebenen Grenzwertes des Ausleitungsparameters des wenigstens einen Druckbehälters, ein Betriebsventil zum Ausleiten des Fluides aus den Druckbehältern und zu der Umwandlungseinheit für den Betrieb der Umwandlungseinheit, eine Betriebsausleitungsöffnung zum Leiten des Fluides von den Druckbehältern zu der Umwandlungseinheit, Druckleitungen zur fluidleitenden Verbindung der Druckbehälter mit dem Betriebsventil, eine Schnittstelle mit einer Befüllöffnung zum Befüllen der Druckbehälter mit dem Fluid, wobei das Ableitungs- und Befüllsystem eine Funktionseinheit umfasst und in der Funktionseinheit als Funktionskomponenten das Betriebsventil, die Betriebsausleitungsöffnung und die Schnittstelle mit der Befüllöffnung zum Befüllen der Druckbehälter integriert sind. Die Funktionskomponenten der Funktionseinheit sind somit in vorteilhafter Weise in die Funktionseinheit integriert und bei der Montage des Ableitungs- und Befüllsystems an einem Kraftfahrzeug müssen diese Funktionskomponenten in vorteilhafter Weise nicht getrennt montiert werden, sondern es kann zunächst die Funktionseinheit mit den notwendigen Funktionskomponenten zur Verfügung gestellt werden und anschließend ist die Funktionseinheit mit den bereits integrierten Funktionskomponenten einfach mit einem geringen Aufwand an dem Kraftfahrzeug zu montieren.

In einer ergänzenden Variante ist in die Funktionseinheit ein Ablassventil als Funktionskomponente zum Ausleiten des Fluides aus den Druckbehältern ab dem Überschreiten des vorgegebenen Grenzwertes des Ausleitungsparameters integriert.

In einer weiteren Ausführungsform umfasst die Schnittstelle mit der Befüllöffnung zum Befüllen der Druckbehälter mit dem Fluid ein Rückschlagventil, so dass das Fluid aufgrund des Rückschlagventils nur in die Befüllöffnung einleitbar, jedoch nicht von den Druckbehältern aus der Befüllöffnung ausleitbar ist. Vorzugsweise ist das Rückschlagventil als Funktionskomponente in die Funktionseinheit integriert.

In einer zusätzlichen Ausgestaltung umfasst die Funktionseinheit einen Druckminderer als Funktionskomponente zur Reduzierung des Druckes des von den Druckbehältern zu der Umwandlungseinheit geleiteten Fluides wenigstens teilweise, insbesondere vollständig, auf den Betriebsdruck für die Umwandlungseinheit.

Zweckmäßig umfasst die Funktionseinheit einen Filter als Funktionskomponente zur Filterung des von den Druckbehältern zu der Umwandlungseinheit geleiteten Fluides.

In einer ergänzenden Variante sind die Funktionskomponenten, insbesondere sämtliche Funktionskomponenten, der Funktionseinheit innerhalb eines Gehäuses der Funktionseinheit eingebaut.

In einer ergänzenden Ausgestaltung umfasst die Funktionseinheit wenigstens eine Einleitungsöffnung, insbesondere mehrere Einleitungsöffnungen, zur Leitung des Fluides von wenigstens einem Druckbehälter in die Funktionseinheit.

Vorzugsweise umfasst das Ableitungs- und Befüllsystem nur eine Betriebsausleitungsöffnung als Funktionskomponente zum Leiten des Fluides von den Druckbehältern zu der Umwandlungseinheit. Insbesondere ist die Betriebsausleitungsöffnung als Funktionskomponente in die Funktionseinheit integriert.

Erfindungsgemäßes Druckbehältersystem, umfassend mehrere Druckbehälter zur Befüllung mit einem Fluid als Brennstoff, ein Ableitungs- und Befüllsystem für die mehreren Druckbehälter, wobei das Ableitungs- und Befüllsystem als ein in dieser Schutzrechtsanmeldung beschriebenes Ableitungs- und Befüllsystem ausgebildet ist.

In einer weiteren Ausgestaltung ist ein Teil der Druckbehälter als je eine Funktionsgruppe angeordnet mit wenigstens zwei Druckbehältern in je einer

Funktionsgruppe und das Druckbehältersystem mehrere Funktionsgruppen umfasst.

In einer ergänzenden Variante sind die Druckbehälter zu den Funktionsgruppen angeordnet indem die Druckbehälter je einer Funktionsgruppe mit einem Verbindungsmittel mechanisch miteinander verbunden sind. Das Verbindungsmittel ist beispielsweise als ein Gruppengehäuse und/oder ein Trägersystem mit wenigstens einem Träger und/oder ein Rahmen und/oder ein Fachwerk ausgebildet. Aufgrund des Verbindungsmittels sind die Druckbehälter in je einer Funktionsgruppe vorzugsweise zu einer Baueinheit und/oder Transporteinheit mechanisch miteinander verbunden. Die Funktionsgruppen können damit einfach transportiert und an einem Kraftfahrzeug befestigt werden. Vorzugsweise sind an dem Verbindungsmittel Vorrichtungen, insbesondere Schrauben und/oder Ösen und/oder Gewinde und/oder Rastvorrichtungen und/oder Befestigungsschellen und/oder Bohrungen und/oder Stege und/oder Haken, ausgebildet zur Fixierung der je einen Funktionsgruppe an einer Karosserie des Kraftfahrzeuges.

In einer zusätzlichen Ausführungsform sind die Funktionsgruppen mit Druckleitungen parallel oder in Reihe mit der Funktionseinheit fluidleitend verbunden zum Leiten des Fluides von den Druckbehältern der Funktionsgruppen zu der Funktionseinheit.

Erfindungsgemäßes Antriebssystem, insbesondere für ein Kraftfahrzeug, umfassend wenigstens eine Umwandlungseinheit als eine Brennstoffzelleneinheit und/oder einen Verbrennungsmotor, ein Druckbehältersystem zur Versorgung der wenigstens einen Umwandlungseinheit mit Brennstoff aus dem Druckbehältersystem, wobei das Druckbehältersystem als ein in dieser Schutzrechtsanmeldung beschriebenes Druckbehältersystem ausgebildet ist.

Erfindungsgemäßes Kraftfahrzeug, umfassend eine Karosserie, mehrere Räder, ein Druckbehältersystem, wenigstens eine Umwandlungseinheit als eine Brennstoffzelleneinheit und/oder einen Verbrennungsmotor, welcher mit dem Fluid als Brennstoff aus dem Druckbehältersystem betreibbar ist, zur Umwandlung elektrochemischer Energie des Brennstoffes in elektrische und/oder mechanische Energie, wobei das Druckbehältersystem als ein in dieser Schutzrechtsanmeldung beschriebenes Druckbehältersystem ausgebildet ist.

In einer ergänzenden Ausführungsform sind die Druckbehälter des Druckbehältersystems unter der Karosserie des Kraftfahrzeuges angeordnet.

In einer weiteren Ausgestaltung ist das Gehäuse der Funktionseinheit einteilig oder mehrteilig.

In einer zusätzlichen Ausführungsform ist das Gehäuse der Funktionseinheit aus Metall, insbesondere Stahl und/oder Messing, und/oder aus Kunststoff, insbesondere faserverstärkten Kunststoff, ausgebildet.

In einer weiteren Ausführungsform weisen die Funktionsgruppen eine im Wesentlichen identische Länge und/oder Breite und/oder Höhe auf. Im Wesentlichen identische Länge und/oder Breite und/oder Höhe bedeutet vorzugsweise, dass sich diese um weniger als 30 %, 20 % oder 10 % unterscheidet.

In einer weiteren Ausführungsform weisen die Funktionsgruppen ein im Wesentlichen identisches Volumen auf. Im Wesentlichen identisches Volumen bedeutet vorzugsweise, dass sich das Volumen um weniger als 30 %, 20 % oder 10 % unterscheidet.

Zweckmäßig ist in eine, insbesondere nur eine, Funktionsgruppe die Funktionseinheit integriert. Beispielsweise können damit in einem Kraftfahrzeug mehrere, insbesondere mit im Wesentlichen identischer Länge und/oder Breite und/oder Höhe, Funktionsgruppen angeordnet sein und in einer Funktionsgruppe ist die Funktionseinheit integriert, so dass keine gesonderte Montage einer Funktionseinheit an dem Kraftfahrzeug notwendig ist.

In einer ergänzenden Ausführungsform weist die Funktionseinheit ein Volumen von wenigstens 0,1 Liter, 0,25 Liter, 0,5 Liter, 1 Liter, 3 Liter, 5 Liter oder 10 Liter auf und/oder das Volumen der Funktionseinheit ist kleiner als 30 Liter, 20 Liter oder 10 Liter. Das Volumen der Funktionseinheit ist insbesondere von einer Außenseite des Gehäuses der Funktionseinheit begrenzt. Die Funktionseinheit weist damit eine kleine kompakte Bauform auf.

In einer ergänzenden Ausgestaltung ist in eine Funktionsgruppe, insbesondere in nur eine Funktionsgruppe, des Druckbehältersystems eine Funktionseinheit eingebaut oder integriert.

Vorzugsweise umfasst das Ableitungs- und Befüllsystem mehrere Ablassventile, insbesondere ein Ablassventil in der Funktionseinheit und/oder je ein Ablassventil in je einer Funktionsgruppe.

In einer zusätzlichen Variante ist je ein Ablassventil von zwei getrennten Ablassventilen gebildet mit einem ersten Ablassventil zum Ausleiten des Fluides aus den Druckbehältern ab dem Überschreiten des vorgegebenen Grenzwertes des Ausleitungsparameters als der Temperatur und einem zweiten Ablassventil zum Ausleiten des Fluides aus den Druckbehältern ab dem Überschreiten des vorgegebenen Grenzwertes des Ausleitungsparameters als dem Druck.

In einer weiteren Ausführungsform sind die Druckbehälter zu den Funktionsgruppen angeordnet indem die Druckbehälter je einer Funktionsgruppe in einem gemeinsamen Gruppengehäuse angeordnet sind und/oder mit einer Druckleitung als einem Hochdruckrail fluidleitend miteinander verbunden sind und/oder die Druckbehälter je einer Funktionsgruppe ein gemeinsames Gruppenablassventil als Ablassventil zum Ausleiten des Fluides aus den Druckbehältern der je einen Funktionsgruppe ab dem Überschreiten eines vorgegebenen Grenzwertes des Ausleitungsparameters umfassen und/oder die Druckbehälter je einer Funktionsgruppe einen gemeinsamen Gruppenfilter als Filter zur Filterung des von den Druckbehältern der je einen Funktionsgruppe zu der Umwandlungseinheit geleiteten Fluides umfassen.

In einer weiteren Ausführungsform ist der Ausleitungsparameter des wenigstens einen Druckbehälters die Temperatur des Fluides in dem Druckbehälter und/oder der Druck des Fluides in dem Druckbehälter und/oder die Temperatur des Ablassventils. Das wenigstens einen Ablassventil, insbesondere die Ablassventile, dienen dazu bei kritischen Betriebszuständen, beispielsweise einem Brand oder einem Unfall, ab dem Überschreiten des Ausleitungsparameters aus Sicherheitsgründen das Fluid unverzüglich in die Umgebung abzulassen. Das wenigstens einen Ablassventil fungiert damit als Überdruckventil zum Ablassen ab dem Überschreiten eines Grenzwertes des Druckes und/oder als Ventil zum Ablassen des Fluides ab dem Überschreiten eines Grenzwertes der Temperatur.

In einer weiteren Variante ist der Brennstoff ein Gas, insbesondere Wasserstoff oder Erdgas, oder Flüssiggas.

In einer ergänzenden Variante ist ein Brennstoff als ein Gas oder eine Flüssigkeit ein Kraftstoff für die Umwandlungseinheit als Brennstoffzelle und/oder Verbrennungsmotor.

Vorzugsweise ist das Betriebsventil aktiv schließbar und öffenbar, insbesondere mittels eines Elektromagneten, und vorzugsweise in Abhängigkeit von dem Betriebszustand der Umwandlungseinheit, insbesondere Brennstoffzelleneinheit. Während des Betriebes der Brennstoffzelleneinheit ist somit das Betriebsventil geöffnet und in einem abgeschalteten Betriebszustand der Brennstoffzelleneinheit ist das Betriebsventil geschlossen.

In einer ergänzenden Ausführungsform umfasst die Brennstoffzelleneinheit ein Gehäuse und/oder eine Anschlussplatte.

In einer ergänzenden Variante umfasst die Brennstoffzelleneinheit eine Gasfördervorrichtung zur Förderung eines gasförmigen Oxidationsmittels zu den Kathoden der Brennstoffzellen.

In einer weiteren Variante umfasst die Brennstoffzelleneinheit wenigstens eine Verbindungsvorrichtung, insbesondere mehrere Verbindungsvorrichtungen, und Spannelemente zum Vorspannen des Brennstoffzellenstapels mit einer Druckkraft.

In einer weiteren Ausgestaltung umfassen die Brennstoffzellen jeweils eine Protonenaustauschermembran, eine Anode, eine Kathode, wenigstens eine Gasdiffusionsschicht und wenigstens eine Bipolarplatte.

In einer weiteren Ausführungsform ist die Verbindungsvorrichtung als ein Bolzen ausgebildet und/oder ist stabförmig.

Zweckmäßig sind die Spannelemente als Spannplatten ausgebildet.

In einer weiteren Variante ist die Gasfördervorrichtung als ein Gebläse oder ein Kompressor ausgebildet.

Vorzugsweise ist der Brennstoff Wasserstoff, wasserstoffreiches Gas, Reformatgas oder Erdgas.

Zweckmäßig sind die Brennstoffzellen und/oder Komponenten im Wesentlichen eben und/oder scheibenförmig ausgebildet.

In einer ergänzenden Variante ist das Oxidationsmittel Luft mit Sauerstoff oder reiner Sauerstoff.

Vorzugsweise ist die Brennstoffzelleneinheit eine PEM-Brennstoffzelleneinheit mit PEM-Brennstoffzellen.

### Kurze Beschreibung der Zeichnungen

Im Nachfolgenden werden Ausführungsbeispiele der Erfindung unter Bezugnahme auf die beigefügten Zeichnungen näher beschrieben. Es zeigt:
- Fig. 1: einen Längsschnitt eines Druckbehälters,
- Fig. 2: einen Querschnitt einer Funktionsgruppe mit drei Druckbehältern,
- Fig. 3: eine stark vereinfachte Darstellung eines Ableitungs- und Befüllsystems mit einem Druckbehältersystem mit mehreren Funktionsgruppen in einem ersten Ausführungsbeispiel,
- Fig. 4: einen stark vereinfachten Querschnitt einer Funktionseinheit des Ableitungs- und Befüllsystems gemäß Fig. 3,
- Fig. 5: eine stark vereinfachte Darstellung des Ableitungs- und Befüllsystems mit dem Druckbehältersystem mit mehreren Funktionsgruppen in einem zweiten Ausführungsbeispiel,
- Fig. 6: eine stark vereinfachte Darstellung des Ableitungs- und Befüllsystems mit dem Druckbehältersystem mit mehreren Funktionsgruppen in einem dritten Ausführungsbeispiel,
- Fig. 7: eine stark vereinfachte Darstellung des Ableitungs- und Befüllsystems mit dem Druckbehältersystem mit mehreren Funktionsgruppen in einem vierten Ausführungsbeispiel,
- Fig. 8: einen stark vereinfachten Längsschnitt einer Brennstoffzelleneinheit mit der Funktionseinheit und
- Fig. 9: eine stark vereinfachte Seitenansicht eines Kraftfahrzeuges mit einem Antriebssystem.

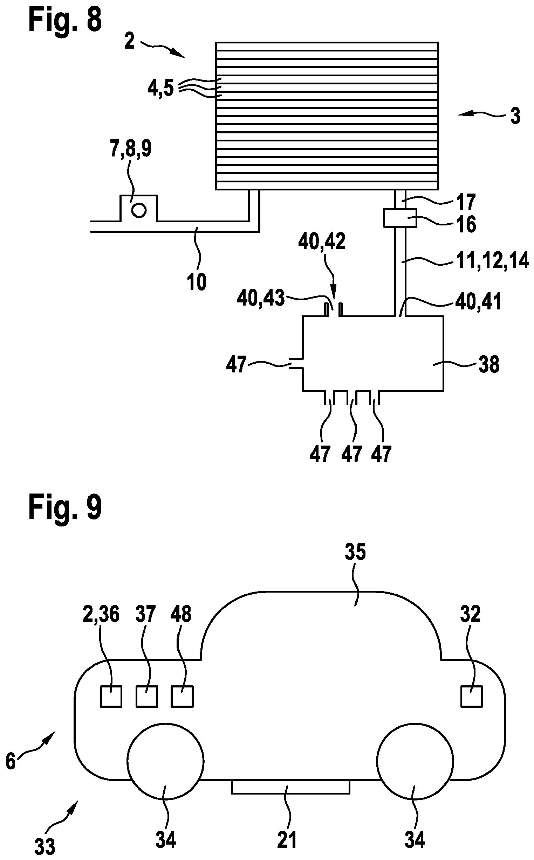

In Fig. 8 ist eine Brennstoffzelleneinheit 2 dargestellt. Die Brennstoffzelleneinheit 2 umfasst einen Brennstoffzellenstapel 3 als einen Brennstoffzellenstack 3 und der Brennstoffzellenstack 3 ist von einem nicht dargestellten Gehäuse und vorzugsweise einer nicht dargestellten Anschlussplatte umschlossen. In dem Brennstoffzellenstack 3 sind eine große Anzahl an Brennstoffzellen 4, nämlich PEM-Brennstoffzellen 5, gestapelt angeordnet. Aufgrund der großen Anzahl der gestapelten Brennstoffzellen 4 von ungefähr 300 bis 400 Brennstoffzellen 4 sind diese in Fig. 8 aus Vereinfachungsgründen nicht dargestellt. In dem Brennstoffzellenstack 3 sind Kanäle zum Durchleiten des Brennstoffes Wasserstoff, Kanäle zum Durchleiten des Oxidationsmittel Luft und Kanäle zum Durchleiten von Kühlmittel ausgebildet (nicht dargestellt). Der Brennstoff Wasserstoff wird zu Anoden und das Oxidationsmittel Luft wird zu Kathoden der Brennstoffzellen 4 geleitet. Das Oxidationsmittel Luft wird mit einer Zufuhrleitung 10 und einer Gasfördereinrichtung 7, beispielsweise einem Gebläse 8 oder einem Kompressor 9, aus der Luft der Umgebung in den Brennstoffzellenstack 2 eingeleitet.

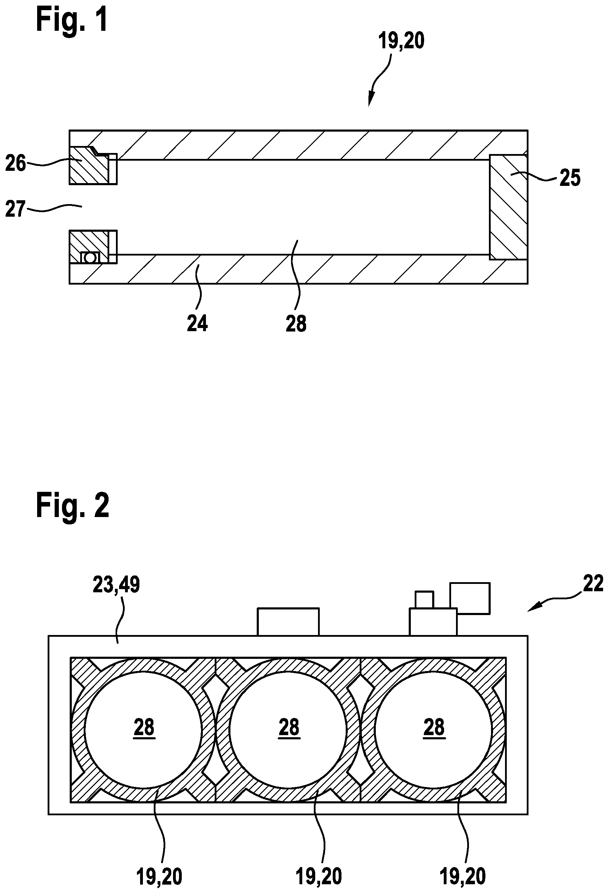

In Fig. 1 ist ein Längsschnitt eines Druckbehälters 19 als ein Druckgasspeicher 20 dargestellt und in Fig. 2 eine Funktionsgruppe 22 mit drei Druckbehältern 19. In dem Druckgasspeicher 20 ist ein Fluid, nämlich das Gas Wasserstoff als Brennstoff, unter einem Druck von ungefähr 400 bis 800 bar in einem Innenraum 28 des Druckbehälters 19 gelagert. Der Innenraum 28 ist von einer zylindermantelförmige Behälterseitenwandung 24, einer im Wesentlichen scheibenförmigen Rückwandung 25 und einer ebenfalls im Wesentlichen scheibenförmigen Vorderwandung 26 begrenzt. Die Behälterseitenwandung 24, die Rückwandung 25 und die Vorderwandung 26 ist dabei aus Metall, insbesondere Stahl, oder einem faserverstärkten Kunststoff ausgebildet. In der Vorderwandung 25 ist eine Öffnung 27 ausgebildet. In der Funktionsgruppe 22 sind die drei Druckbehälter 19 innerhalb eines quaderförmigen Gruppengehäuses 23 angeordnet, d. h. mit dem Gruppengehäuse 23 als einem Verbindungsmittel 49 mechanisch miteinander verbunden (Fig. 2).

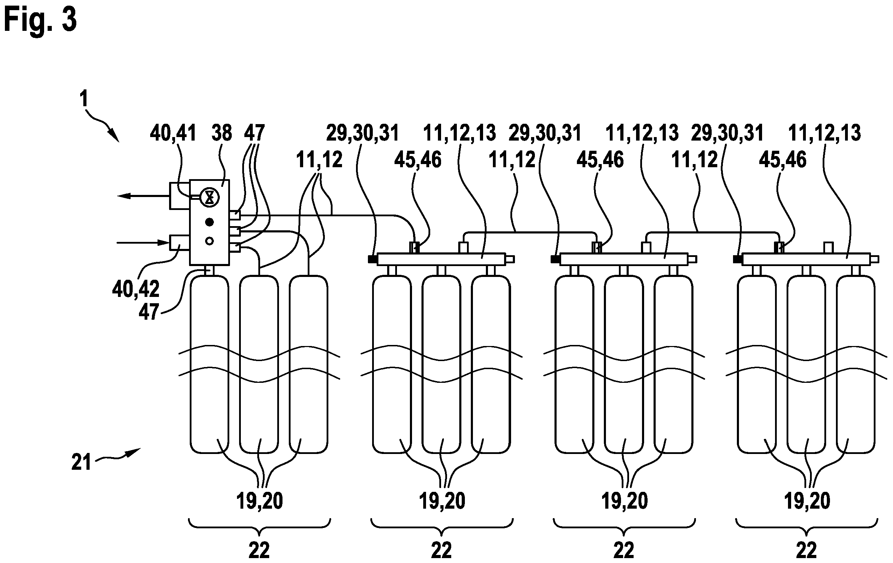

In Fig. 3 ist ein Druckbehältersystem 21 dargestellt mit 12 Druckbehältern 19, wobei je 3 Druckbehälter 19 zu der Funktionsgruppe 22 zusammengefasst sind. Das Druckbehältersystem 21 umfasst somit 4 Funktionsgruppen 22. Das Druckbehältersystem 21 umfasst außerdem ein Ableitungs- und Befüllsystem 1 in einem ersten Ausführungsbeispiel für die Druckbehälter 19 zur Ausleitung des Brennstoffes aus dem Innenraum 28 zu einer Umwandlungseinheit 36 als der Brennstoffzelleneinheit 2 oder zu einem Verbrennungsmotor 48. Die drei Druckbehälter 19 in der Funktionsgruppe 22 sind mit einer Druckleitung 11 als Brennstoffleitung 12, nämlich einem Brennstoffleitungsrail 13, fluidleitend miteinander verbunden. Die Öffnungen 27 der drei Druckbehälter 19 münden somit in das Brennstoffleitungsrail 13 (Fig. 3). In das Brennstoffleitungsrail 13 ist ein Ablassventil 29 als Gruppenablassventil 30 als ein TPRD 31 (temperatur pressure relief device) eingebaut. Ab dem Überschreiten nur eines vorgegebenen Grenzwertes eines Ausleitungsparameters des Ablassventil 29, nämlich dem Ableitungsparameter eines vorgegebenen Druckes des Fluides in dem Innenraum 28 und einer vorgegebenen Temperatur des Ablassventils 29, öffnet das Ablassventil 29 und leitet das Fluid von dem Innenraum 28 des Druckbehälters 19 in die Umgebung ab. Das Ablassventil 29 ist thermisch gut leitend mit der Vorderwandung 26 des Druckbehälters 19 verbunden aufgrund des Brennstoffleitungsrails 13 aus gut wärmeleitendem Metall, sodass die Temperatur des Fluides in dem Innenraum 28 im Wesentlichen der Temperatur des Ablassventils 29 entspricht. Die vorgegebene Temperatur des Ausleitungsparameters ist beispielsweise 200 °C und der vorgegebene Druck des Ausleitungsparameters bei einem maximal zulässigen Betriebsdruck des Druckbehälters 19 von 800 bar beträgt 850 bar. Dies bedeutet, dass bei einem Überschreiten des maximal zulässigen Betriebsdruck des Druckbehälters 19 um 50 bar das Ablassventil 29 geöffnet wird. Das Druckbehältersystem 21 mit den 4 Funktionsgruppen 22 umfasst somit gemäß Fig. 3 drei Brennstoffleitungsrails 13. In die Brennstoffleitungsrails 13 ist jeweils das Ablassventil 29 als das Gruppenablassventil 30 für je eine Funktionsgruppe 22 eingebaut. Ferner sind in die Brennstoffleitungsrails 13 Filter 45 als Gruppenfilter 46 eingebaut zur Filterung des von den Funktionsgruppen 22 zu der Umwandlungseinheit 36 geleiteten Brennstoffes.

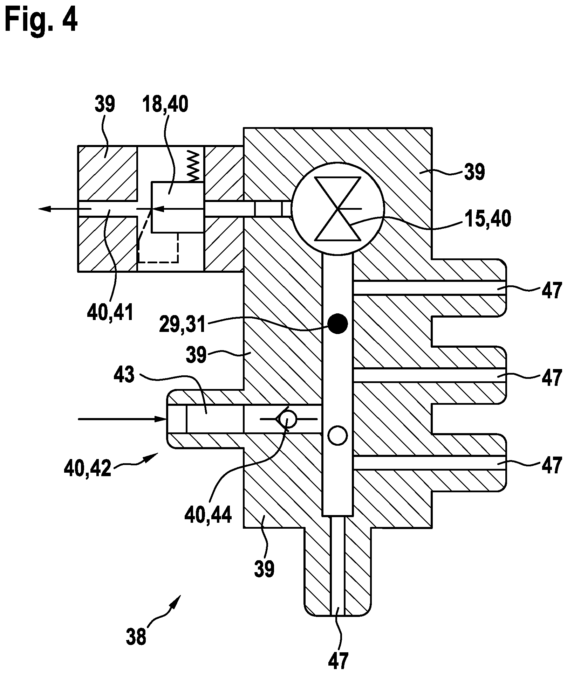

In Fig. 4 ist eine Funktionseinheit 38 des Ableitungs- und Befüllsystems 1 dargestellt. Die Funktionseinheit 38 umfasst ein Gehäuse 39 und/oder einen Rahmen 39 und/oder ein Tragsystem 39 aus Metall und/oder Kunststoff und innerhalb eines von dem Gehäuse 39 und/oder dem Rahmen 39 und/oder dem Tragsystem 39 begrenzten Innenraumes sind mehrere Funktionskomponenten 40 in die Funktionseinheit 38 integriert. In die Funktionseinheit 38 ist das Ablassventil 29 integriert, welches ab dem Überschreiten eines vorgegebenen Grenzwertes des Ausleitungsparameters, nämlich dem Druck des Brennstoffes an der Funktionseinheit 38 und der Temperatur des Ablassventils 29 in der Funktionseinheit 38, den Brennstoff unverzüglich durch eine nicht dargestellte Ablassöffnung in der Funktionseinheit 38 in die Umgebung abgeleitet. Bereits bei dem Überschreiten eines vorgegebenen Grenzwertes nur eines Ausleitungsparameters erfolgt somit die unverzügliche Ableitung des Brennstoffes in die Umgebung. In die Funktionseinheit 38 als weitere Funktionskomponente 40 ist außerdem eine Betriebsausleitungsöffnung 41 zum Leiten des Fluides als dem Brennstoff von den Druckbehältern 19 zu der Umwandlungseinheit 36 ausgebildet. Zusätzlich ist in der Funktionseinheit 38 als weitere Funktionskomponente 40 eine Schnittstelle 42 zum Befüllen der Druckbehälter 19 ausgebildet. Die Schnittstelle 42 zum Befüllen umfasst eine Befüllöffnung 43 und ein Rückschlagventil 44. Durch die Befüllöffnung 43 kann das Fluid als der Kraftstoff in die Druckbehälter 19 eingeleitet werden und das Rückschlagventil 44 verhindert, dass bereits in die Druckbehältern 19 eingeleiteter Brennstoff durch die Befüllöffnung 43 in die Umgebung entweicht. Zusätzlich ist in die Funktionseinheit 38 ein Betriebsventil 15 integriert. Das Betriebsventil 15 öffnet nur während eines Betriebes der Brennstoffzelleneinheit 2 und bei einer abgeschalteten Brennstoffzelleneinheit 2 ist das Betriebsventil 15 geschlossen. In die Funktionseinheit 38 ist außerdem ein Druckminderer 18 eingebaut als Funktionskomponente 40 zur Reduzierung des Druckes des Brennstoffes in den Druckbehältern 19 wenigstens teilweise auf den notwendigen Druck zur Einleitung des Brennstoffes in die Kanäle für Brennstoff des Brennstoffzellenstacks 3. In die Funktionseinheit 38 sind außerdem 4 Einleitungsöffnungen 47 ausgebildet zur Einleitung des Brennstoffes aus den Druckbehältern 19 in die Funktionseinheit 38. In dem in Fig. 3 dargestellten ersten Ausführungsbeispiel des Druckbehältersystems 21 sind die in Fig. 3 links dargestellten 3 Druckbehälter 19, welche nicht mit dem Brennstoffleitungsrail 13 zusammengefasst sind, direkt mit Druckleitungen 11 als Brennstoffleitungen 12 mit der Funktionseinheit 38 direkt und unmittelbar verbunden. Die übrigen 9 Druckbehälter 19, welche zu 3 Funktionsgruppen 22 mit dem Brennstoffleitungsrail 13 zusammengefasst sind, sind mit nur einer Einleitungsöffnung 47 fluidleitend mit der Funktionseinheit 38 verbunden. Die 3 rechts dargestellten Funktionsgruppen 22 sind dabei fluidleitend in Reihe mit der Funktionseinheit 38 verbunden, weil die Druckleitungen 11 als die Brennstoffleitungen 12 jeweils von einem Brennstoffleitungsrail 13 einer Funktionsgruppe 22 zu einem Brennstoffleitungsrail 13 einer anderen Funktionsgruppe 22 geführt sind.

In Fig. 8 ist in Ergänzung zu der Brennstoffzelleneinheit 2 auch die Funktionseinheit 38 des in Fig. 3 dargestellten Druckbehältersystems 21 dargestellt. Die Betriebsausleitungsöffnung 41 mündet in eine Mitteldruckleitung 14 und die Mitteldruckleitung 14 ist zu einem Injektor 16 geführt. Von dem Injektor 16 wird der Brennstoff durch eine Zufuhrleitung 17 den Kanälen für Brennstoff des Brennstoffzellenstacks 3 zugeführt. In dem Druckminderer 18, welcher in die Funktionseinheit 38 integriert ist, erfolgt eine Reduzierung des Druckes von ungefähr 800 bar auf den Druck in der Mitteldruckleitung 14 von ungefähr 10 bar bis 20 bar. In dem Injektor 16 wird der Druck auf einen Einblasdruck zwischen 1 bar und 3 bar als Betriebsdruck der Brennstoffzelleneinheit 2 als Umwandlungseinheit 36 reduziert zur Einleitung in die Kanäle für Brennstoff des Brennstoffzellenstacks 3. Abweichend hiervon (nicht dargestellt) kann mit dem in die Funktionseinheit 38 integrierten Druckminderer 18 der Druck auf den Einblasdruck als Betriebsdruck zwischen 1 bar und 3 bar reduziert werden, sodass kein Injektor 16 notwendig ist und der Druckminderer 18 zusätzlich als der Injektor 16 fungiert.

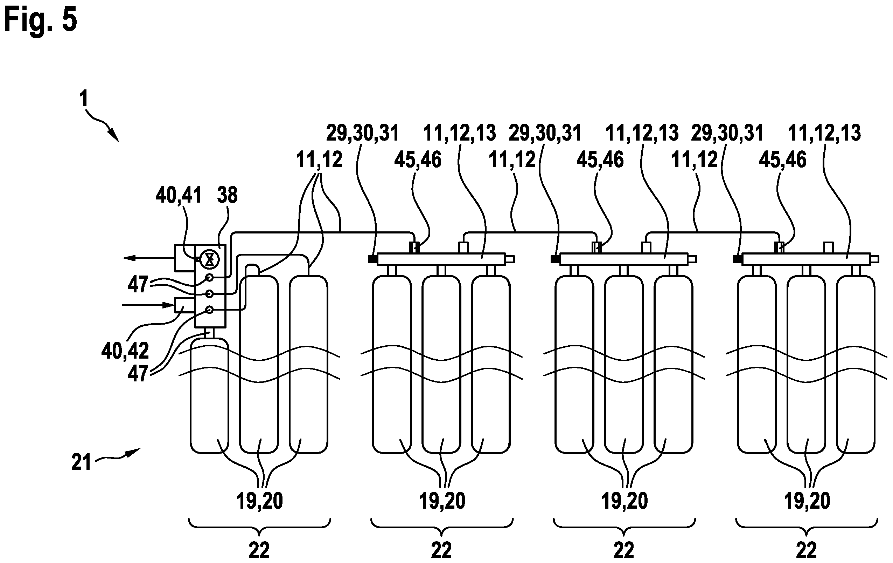

In Fig. 5 ist ein zweites Ausführungsbeispiel des Druckbehältersystems 21 dargestellt. Im Nachfolgenden werden im Wesentlichen nur die Unterschiede zu dem in Fig. 3 dargestellten ersten Ausführungsbeispiel beschrieben. Von den 3 Druckbehältern 19, welche in Fig. 5 links dargestellt sind und die nicht zu der Funktionsgruppe 22 mit einem gemeinsamen Brennstoffleitungsrail 13 zusammengefasst sind, ist ein Druckbehälter 19 kleiner mit einer geringeren Länge ausgebildet, sodass dieser kleinere Druckbehälter 19 zusammen mit der Funktionseinheit 38 ungefähr die Größe und Länge der übrigen Druckbehältern 19 aufweist. Damit kann die Funktionseinheit 38 mit den 3 in Fig. 5 links dargestellten Druckbehältern 19 zu einer Baueinheit zusammengefasst werden, welche ungefähr die Größe der übrigen Funktionsgruppen 22 aufweist. Diese Funktionsgruppen 22 können damit in vorteilhafter Weise als Module mit im Wesentlichen gleicher Größe an einem Kraftfahrzeug 33 befestigt werden und diese Module umfassen dabei auch die Funktionseinheit 38. Dadurch können in vorteilhafter Weise bei Kraftfahrzeugen 33 Module als Funktionsgruppen 22 mit und ohne der Funktionseinheit 38 angeordnet werden, sodass lediglich an ein Modul bzw. an eine Funktionsgruppe 22 mit bereits integrierter Funktionseinheit 38 eine Brennstoffleitung 12 an der Betriebsausleitungsöffnung 41 anzuschließen ist. Die in Fig. 5 links dargestellten 3 Druckbehälter 19 mit der Funktionseinheit 38 können auch innerhalb des Gruppengehäuses 22 angeordnet sein und damit eine Funktionsgruppe 22 mit 3 Druckbehältern 19 und der integrierten Funktionseinheit 38 und Gruppengehäuse 23 ausbilden.

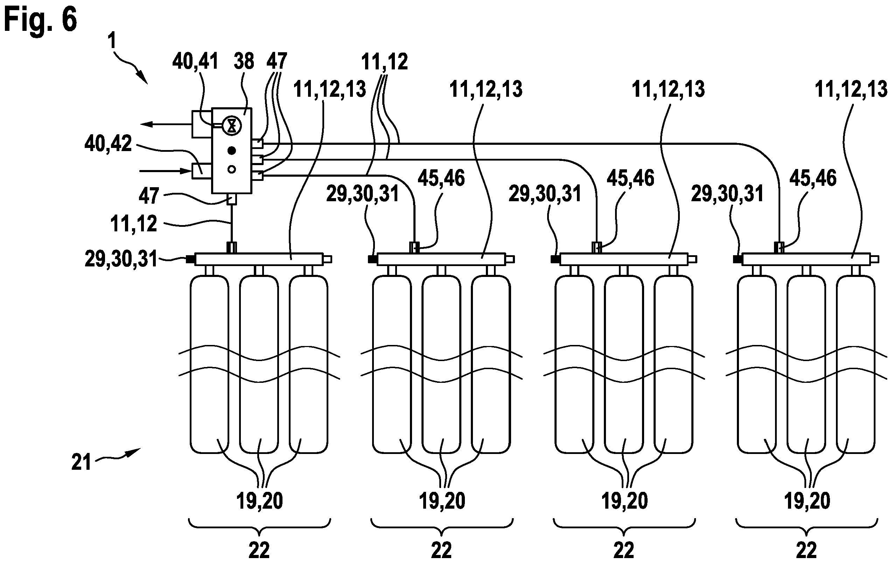

In Fig. 6 ist ein drittes Ausführungsbeispiel des Druckbehältersystems 21 dargestellt. Im Nachfolgenden werden im Wesentlichen nur die Unterschiede zu dem in Fig. 3 dargestellten Ausführungsbeispiel beschrieben. Sämtliche der 12 Druckbehälter 19 sind zu 4 Funktionsgruppen 22 mit je 3 Druckbehältern 19 und je einem Brennstoffleitungsrail 13 zusammengefasst. Die 4 Funktionsgruppen 22 sind mit je einer Brennstoffleitung 12 fluidleitend parallel mit der Funktionseinheit 38 verbunden. Je eine Brennstoffleitung 12 ist somit von je einem Brennstoffleitungsrail 13 einer Funktionsgruppe 22 zu einer Einleitungsöffnung 47 der Funktionseinheit 38 geführt.

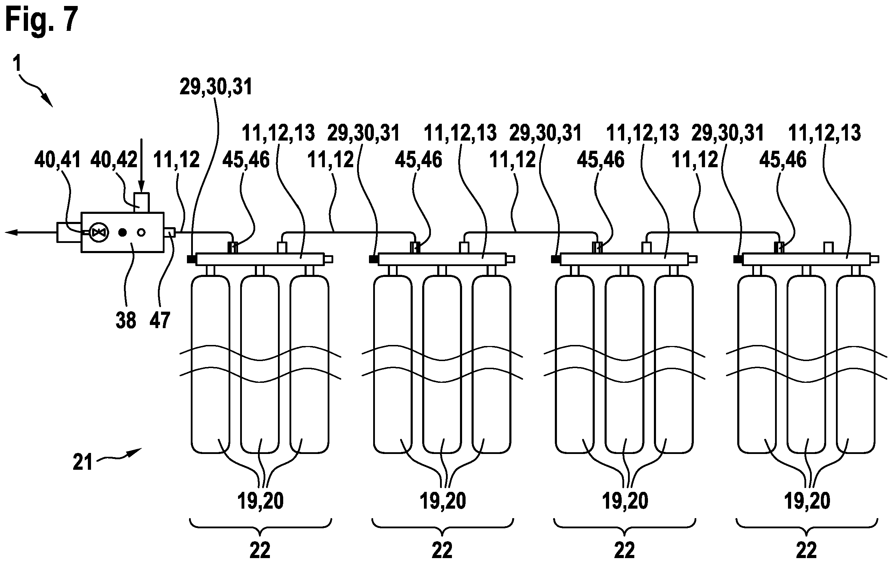

In Fig. 7 ist ein viertes Ausführungsbeispiel des Druckbehältersystems 21 dargestellt. Im Nachfolgenden werden im Wesentlichen nur die Unterschiede zu dem in Fig. 3 dargestellten Ausführungsbeispiel beschrieben. Sämtliche der 12 Druckbehälter 19 sind zu 4 Funktionsgruppen 22 zusammengefasst mit je 3 Druckbehältern 19 und je einem Brennstoffleitungsrail 13. Sämtliche Funktionsgruppen 22 sind fluidleitend in Reihe mit der Funktionseinheit 38 verbunden, sodass von den 12 Druckbehältern 19 nur eine Druckleitung 11 direkt zu nur einer Einleitungsöffnung 47 der Funktionseinheit 38 geführt ist.

Ein in Fig. 9 dargestelltes Kraftfahrzeug 33, beispielsweise ein Personenkraftwagen oder Lastkraftwagen, umfasst eine Karosserie 35 und 4 Räder 34. Das Druckbehältersystem 21 ist untenseitig unter der Karosserie 35 an dem Kraftfahrzeug 33 befestigt. Der Brennstoff wird aus dem Druckbehältersystem 21 mittels der Funktionseinheit 38 gemäß Fig. 8 zu der Brennstoffzelleneinheit 2 geleitet. In der Brennstoffzelleneinheit 2 wird die in dem Brennstoff Wasserstoff vorhandene elektrochemische Energie in elektrische Energie umgewandelt. Die elektrische Energie, welche von der Brennstoffzelleneinheit 2 erzeugt wird, dient zum Antrieb eines Elektromotors 37 und mittels des Elektromotors 37 wird das Kraftfahrzeug 33, d. h. die Räder 34 des Kraftfahrzeuges 33, angetrieben. Alternativ kann mit dem Brennstoff aus dem Druckbehältersystem 21 auch der Verbrennungsmotor 48 als weitere Umwandlungseinheit 36 angetrieben werden und der Verbrennungsmotor 48 wandelt die elektrochemische Energie des Brennstoffes unmittelbar in mechanische Energie zum Antrieb der Räder 34 um. Ein Antriebssystem 6, welches in das Kraftfahrzeug 33 eingebaut ist, umfasst somit die Umwandlungseinheit 36 und das Druckbehältersystem 21. In das Kraftfahrzeug 33 ist außerdem eine Steuerungs- und/oder Regeleinheit 32 eingebaut zur Steuerung und/oder Regelung des Kraftfahrzeuges 33, insbesondere des Druckbehältersystems 21.

Insgesamt betrachtet sind mit dem erfindungsgemäßen Ableitungs- und Befüllsystem 1, dem erfindungsgemäßen Druckbehältersystem 21, dem erfindungsgemäßen Antriebssystem 6 und dem erfindungsgemäßen Kraftfahrzeug 33 wesentliche Vorteile verbunden. Die Druckbehälter 19 des Druckbehältersystems 21 sind zu modulartigen Funktionsgruppen 22 mit im Wesentlichen gleicher Größe zusammengefasst. Diese Funktionsgruppen 22 als Module können einfach in Kraftfahrzeuge 33 eingebaut werden. In die Funktionseinheit 38 sind wesentliche Funktionskomponenten 40 bereits integriert, sodass der Herstellung und Montageaufwand für das Druckbehältersystem 21 wesentlich reduziert ist. Das Ableitungs- und Befüllsystem 1 sowie das Druckbehältersystem 21 kann dabei beispielsweise auch in Lastkraftwagen mit einer großen Anzahl an Druckbehältern 19 zum Transport des Brennstoffes Wasserstoff zu Wasserstofftankstellen eingesetzt werden. Darüber hinaus kann das Ableitungs- und Befüllsystem 1 sowie das Druckbehältersystem 21 auch in stationären Anwendungen eingesetzt werden.

## Patentansprüche

1. Ableitungs- und Befüllsystem (1) für mehrere mit einem Fluid befüllte Druckbehälter (19) zur Ausleitung des Fluides aus dem wenigstens einen Druckbehälter (19) in die Umgebung ab dem Überschreiten eines vorgegebenen Grenzwertes eines Ausleitungsparameters wenigstens eines Druckbehälters (19) und zur Ausleitung des Fluides als Brennstoff zu einer Umwandlungseinheit (36) als einer Brennstoffzelleneinheit (2) und/oder einem Verbrennungsmotor (48), umfassend
- wenigstens ein Ablassventil (29) zum Ausleiten des Fluides aus dem wenigstens einen Druckbehälter (19) ab dem Überschreiten des vorgegebenen Grenzwertes des Ausleitungsparameters des wenigstens einen Druckbehälters (19),
- ein Betriebsventil (15) zum Ausleiten des Fluides aus den Druckbehältern (19) und zu der Umwandlungseinheit (36) für den Betrieb der Umwandlungseinheit (36),
- eine Betriebsausleitungsöffnung (41) zum Leiten des Fluides von den Druckbehältern (19) zu der Umwandlungseinheit (36),
- Druckleitungen (11) zur fluidleitenden Verbindung der Druckbehälter (19) mit dem Betriebsventil (15),
- eine Schnittstelle (42) mit einer Befüllöffnung (43) zum Befüllen der Druckbehälter (19) mit dem Fluid,
**dadurch gekennzeichnet, dass**
das Ableitungs- und Befüllsystem (1) eine Funktionseinheit (38) umfasst und in der Funktionseinheit (38) als Funktionskomponenten (40) das Betriebsventil (15), die Betriebsausleitungsöffnung (41) und die Schnittstelle (42) mit der Befüllöffnung (43) zum Befüllen der Druckbehälter (19) integriert sind.

2. Ableitungs- und Befüllsystem nach Anspruch 1,
**dadurch gekennzeichnet, dass**
in die Funktionseinheit (38) ein Ablassventil (29) als Funktionskomponente (40) zum Ausleiten des Fluides aus den Druckbehältern (19) ab dem Überschreiten des vorgegebenen Grenzwertes des Ausleitungsparameters integriert ist.

3. Ableitungs- und Befüllsystem nach Anspruch 1 oder 2,
**dadurch gekennzeichnet, dass**
die Schnittstelle (42) mit der Befüllöffnung (43) zum Befüllen der Druckbehälter (19) mit dem Fluid ein Rückschlagventil (44) umfasst, so dass das Fluid aufgrund des Rückschlagventils (44) nur in die Befüllöffnung (43) einleitbar, jedoch nicht von den Druckbehältern (19) aus der Befüllöffnung (43) ausleitbar ist.

4. Ableitungs- und Befüllsystem nach einem oder mehreren der vorhergehenden Ansprüche,
**dadurch gekennzeichnet, dass**
die Funktionseinheit (38) einen Druckminderer (18) als Funktionskomponente (40) zur Reduzierung des Druckes des von den Druckbehältern (19) zu der Umwandlungseinheit (36) geleiteten Fluides wenigstens teilweise, insbesondere vollständig, auf den Betriebsdruck für die Umwandlungseinheit (36) umfasst.

5. Ableitungs- und Befüllsystem nach einem oder mehreren der vorhergehenden Ansprüche,
**dadurch gekennzeichnet, dass**
die Funktionseinheit (38) einen Filter (45) als Funktionskomponente (40) zur Filterung des von den Druckbehältern (19) zu der Umwandlungseinheit (36) geleiteten Fluides umfasst.

6. Ableitungs- und Befüllsystem nach einem oder mehreren der vorhergehenden Ansprüche,
**dadurch gekennzeichnet, dass**
die Funktionskomponenten (40), insbesondere sämtliche Funktionskomponenten (40), der Funktionseinheit (38) innerhalb eines Gehäuses (39) der Funktionseinheit (38) eingebaut sind.

7. Ableitungs- und Befüllsystem nach einem oder mehreren der vorhergehenden Ansprüche,
**dadurch gekennzeichnet, dass**
die Funktionseinheit (38) wenigstens eine Einleitungsöffnung (47), insbesondere mehrere Einleitungsöffnungen (47), zur Leitung des Fluides von wenigstens einem Druckbehälter (19) in die Funktionseinheit (38) umfasst.

8. Ableitungs- und Befüllsystem nach einem oder mehreren der vorhergehenden Ansprüche,
**dadurch gekennzeichnet, dass**
das Ableitungs- und Befüllsystem (1) nur eine Betriebsausleitungsöffnung (41) als Funktionskomponente (40) zum Leiten des Fluides von den Druckbehältern (19) zu der Umwandlungseinheit (36) umfasst.

9. Druckbehältersystem (21), umfassend
- mehrere Druckbehälter (19) zur Befüllung mit einem Fluid als Brennstoff,
- ein Ableitungs- und Befüllsystem (1) für die mehreren Druckbehälter,
**dadurch gekennzeichnet, dass**
das Ableitungs- und Befüllsystem (1) gemäß einem oder mehrerer der vorhergehenden Ansprüche ausgebildet ist.

10. Druckbehältersystem nach Anspruch 9,
**dadurch gekennzeichnet, dass**
ein Teil der Druckbehälter (19) als je eine Funktionsgruppe (22) angeordnet ist mit wenigstens zwei Druckbehältern (19) in je einer Funktionsgruppe (22) und das Druckbehältersystem (21) mehrere Funktionsgruppen (22) umfasst.

11. Druckbehältersystem nach Anspruch 10,
**dadurch gekennzeichnet, dass**
die Druckbehälter (19) zu den Funktionsgruppen (22) angeordnet sind indem die Druckbehälter (19) je einer Funktionsgruppe (22) mit einem Verbindungsmittel (49) mechanisch miteinander verbunden sind.

12. Druckbehältersystem nach einem oder mehreren der Ansprüche 9 bis 11,
**dadurch gekennzeichnet, dass**
die Funktionsgruppen (22) mit Druckleitungen (11) parallel oder in Reihe mit der Funktionseinheit (38) fluidleitend verbunden sind zum Leiten des Fluides von den Druckbehältern (19) der Funktionsgruppen (22) zu der Funktionseinheit (38).

13. Antriebssystem (6), insbesondere für ein Kraftfahrzeug (33), umfassend
- wenigstens eine Umwandlungseinheit (36) als eine Brennstoffzelleneinheit (2) und/oder einen Verbrennungsmotor (48),
- ein Druckbehältersystem (21) zur Versorgung der wenigstens einen Umwandlungseinheit (36) mit Brennstoff aus dem Druckbehältersystem (21),
**dadurch gekennzeichnet, dass**
das Druckbehältersystem (21) gemäß einem oder mehrerer der Ansprüche 9 bis 12 ausgebildet ist.

14. Kraftfahrzeug (33), umfassend
- eine Karosserie (35),
- mehrere Räder (34),
- ein Druckbehältersystem (21),
- wenigstens eine Umwandlungseinheit (36) als eine Brennstoffzelleneinheit (2) und/oder einen Verbrennungsmotor (48), welcher mit dem Fluid als Brennstoff aus dem Druckbehältersystem (21) betreibbar ist, zur Umwandlung elektrochemischer Energie des Brennstoffes in elektrische und/oder mechanische Energie,
**dadurch gekennzeichnet, dass**
das Druckbehältersystem (21) gemäß einem oder mehrerer der Ansprüche 9 bis 12 ausgebildet ist.

15. Kraftfahrzeug nach Anspruch 14,
**dadurch gekennzeichnet, dass**
die Druckbehälter (19) des Druckbehältersystems (21) unter der Karosserie (35) des Kraftfahrzeuges (33) angeordnet sind.
